# EUROPEAN PATENT APPLICATION

(11) **EP 1 378 714 A1**
(43) Date of publication of application: **07.01.2004**
(21) Application number: 03396068.3
(22) Date of filing: 04.07.2003
(51) Int. Cl.: F24F 13/12, F16K 31/46

(54) **Regulator for air flow**

(30) Priority: 05.07.2002 FI 20021324
(71) Applicant: Sanhem-Konsultit OY, 01201 Vantaa (FI)
(72) Inventor: Grönlund, Christer, 01230 Vantaa (FI); Paananen, Tapio, 8500 Lohja as (FI)
(74) Representative: Pelin, Torolf

(57) **Abstract**

The invention relates to a regulator for air flow, comprising a housing (1) which has air ducts (2, 3) connected therewith and which is provided with an air flow controller, such as a perforated panel (4), on top of which lies a movable throttle plate (5) adjustable by means of a working mechanism for controlling the air flow in the regulator. The working mechanism comprises an actuating motor (6), rotating a cogged wheel (7) that drives a cogged belt (8), on which the throttle plate (5) is mounted.

## Description

This invention relates to a regulator for air flow, comprising a housing which has air ducts connected therewith and which is provided with an air flow controller, such as a perforated panel, on top of which lies a movable throttle plate adjustable by means of a working mechanism for controlling the air flow in the regulator.

Air conditioning systems require a controller capable of regulating basic ventilation, as well as of restricting/reducing air flow as necessary. A restriction of air flow saves energy and air flow can also be used for regulating room temperature.

For example, air flow in office buildings outside service hours should be reduced to about 30% of the basic ventilation level. Another application is ventilation in ships, in which cabin temperatures, for example, are controlled by the regulation of air flow.

Regulation of air flow can be implemented e.g. with a room thermostat or a carbon dioxide meter, sensing room temperature, air quality, or the regulation can be time-controlled. A third example is manual regulation.

### Prior art

There are several regulators in the marketplace based on adjusting the quantity of air. Nearly all are based on a "damper". Restriction of air flow is attempted by changing the damper angle in the device. The method has its weaknesses in the sense that, as turning of the damper is commenced from an on-position (damper parallel to air flow) towards an off-position (transverse to air flow), the air flow rate increases and constriction is almost non-existent. In reality, it is only the final 20% of the turning motion which adjusts the air flow. The control of this small movement is almost impossible, and even minor hysteresis often causes a 10% wobble in the air flow.

For example, FI patent 97640 and Patent application FI-990015 disclose per se known solutions, in which a throttle plate is manipulated on top of a perforated panel.

An air flow regulator of the invention is characterized in that the working mechanism comprises an actuator, rotating a cogged wheel that drives a cogged belt, on which the throttle plate is mounted.

Other embodiments of the invention are disclosed in claims 2, 3 and 4.

This invention offers an advantage of being equally adaptable to an actuating motor, permanent setting, as well as to manual adjustment. A second advantage of this invention is that the length of a movement can be changed by changing the diameter of a central cogwheel. This is an undisputed advantage, with the knowledge that the most important actuators in control engineering have a turning range of only 95°.

A single movement can be used for locking a basic setting, and a required restriction of air flow can be effected by continuing the movement. The throttle plate is used for shutting one vertical row of holes at a time in the perforated panel. The regulation of air flow is extremely precise in all positions and the volume of air flow can be mathematically defined as "the coefficient of control pressure multiplied by the number of presently open holes equals the quantity of air".

By rotating the central cogwheel manually, it is possible to effect such adjustment of the throttle plate that it corresponds to a desired basic ventilation at a given duct pressure. This can be followed by locking the movement of the cogwheel in one direction. The restricted air flow is then adjusted by turning the central cogwheel, either manually or by means of an actuator, in the other direction for obtaining a required minimum air flow. The cogwheel movement can be limited also in the direction of minimum air flow.

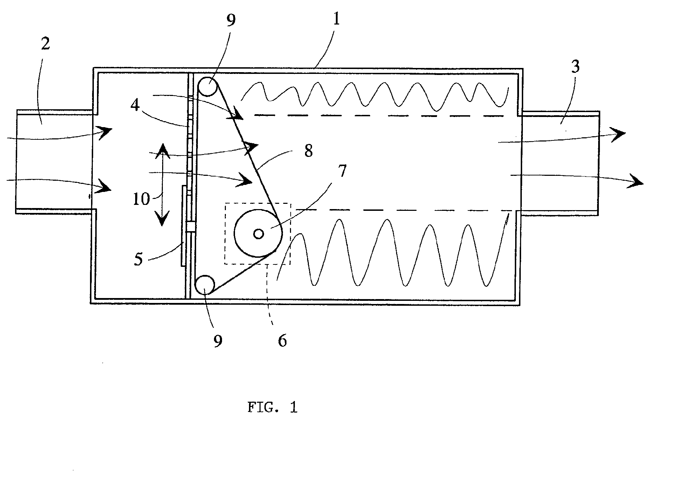

The invention will now be described by way of an example with reference to the accompanying drawing, which shows a regulator for air flow in a cut-away view.

The regulator comprises a housing 1, having air ducts 2, 3 connected therewith. The regulator has a controller constituted by a perforated panel 4, on top of which lies a movable throttle plate 5. The throttle plate 5 is adjustable by a working mechanism for controlling the air flow in the regulator. The working mechanism comprises an actuator 6, rotating a cogged wheel 7 that drives a cogged belt 8, on which the throttle plate is mounted.

The cogged belt 8 is endless and guided from the cogged wheel 7 to the throttle plate 5 over two deflector wheels 9. The actuator 6 has a turning range of 95°, and the transmission ratio, i.e. the diameter of the cogged wheel 7, is of such a size that the throttle plate 5 has an action movement 10 which is optimal.

The actuator 6 may also comprise a knob, a wheel, a cable or another such manually operated control means.

## Claims

1. A regulator for air flow, comprising a housing (1) which has air ducts (2, 3) connected therewith and which is provided with an air flow controller, such as a perforated panel (4), on top of which lies a movable throttle plate (5) adjustable by means of a working mechanism for controlling the air flow in the regulator, **characterized in that** the working mechanism comprises an actuator (6), rotating a cogged wheel (7) that drives a cogged belt (8), on which the throttle plate (5) is mounted.

2. A regulator as set forth in claim 1, **characterized in that** the actuator (6) comprises an actuating motor.

3. A regulator as set forth in claim 1 or 2, **characterized in that** the cogged belt (8) is endless and guided from the cogged wheel (7) to the throttle plate (5) over two deflector wheels (9).

4. A regulator as set forth in claim 1, 2 or 3, **characterized in that** the actuator (6) has a turning range of 95°, and the transmission ratio, i.e. the diameter of the cogged wheel (7), is of such a size that the throttle plate (5) has an action movement (10) which is optimal.
